(19) Europäisches Patentamt
European Patent Office
Office européen des brevets

(11) Publication number: 0 110 848
B1

(12) **EUROPEAN PATENT SPECIFICATION**

(45) Date of publication of patent specification: **30.12.86**

(51) Int. Cl.[4]: **C 01 G 49/00,** C 02 F 1/52

(21) Application number: **83850283.9**

(22) Date of filing: **26.10.83**

# (54) A method for producing water-purifying chemicals.

(30) Priority: **01.11.82 SE 8206202**

(43) Date of publication of application:
**13.06.84 Bulletin 84/24**

(45) Publication of the grant of the patent:
**30.12.86 Bulletin 86/52**

(84) Designated Contracting States:
**AT BE CH DE FR GB IT LI LU NL SE**

(56) References cited:
**DE-A-1 517 696**
**DE-A-2 636 349**
**DE-B-2 136 303**
**DE-B-2 630 628**
**US-A-3 539 337**
**US-A-4 089 886**

(73) Proprietor: **Boliden Aktiebolag**
**Box 5508**
**S-114 85 Stockholm (SE)**

(72) Inventor: **Hellström, Bengt Louis Christian**
**Kustvägen 34A**
**S-261 75 Asmundtorp (SE)**
Inventor: **Steen, Billy Dennis**
**Skiffervägen 5**
**S-692 00 Kumla (SE)**
Inventor: **Stendahl, Kjell Erik**
**Lärkstigen 19**
**S-255 90 Helsingborg (SE)**

(74) Representative: **Inger, Lars Ulf Bosson et al**
**Boliden AB Patent & Trade Marks Box 5508**
**S-114 85 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 110 848 B1**

Courier Press, Leamington Spa, England.

**Description**

Technical field

The present invention relates to a method for producing from divalent iron a water-purifying chemical that contains trivalent iron.

The object of the invention is to provide a simple and rational process for producing from a divalent iron starting material a water-purifying chemical that contains trivalent iron. More specifically, the object of the invention is to oxidise divalent iron to trivalent iron in a simple and rational manner.

Background art

Salts containing trivalent iron are presently used as precipitating chemicals in water-purifying processes, the ferric ions having the ability to form flocs containing colloidal substances present in the water, together with the co-precipitation of the phosphates present. The trivalent iron is often added in chloride form, or in the form of a double salt comprising chloride and sulphate anions. Such water-purifying chemicals are delivered in the form of solutions containing 12% iron and are used in large purifying plants with short through-flow times.

With certain purifying plants it is possible to use ferrous sulphate heptahydrate, which is less expensive, particularly in the case of long through-flow times. In this case, the ferrous ions are oxidised to ferric ions by the biological substances present in the water, these ferric ions serving as the coagulating (flocculating) ions in the system.

Ferrous sulphate-heptahydrate is a fatal product obtained in large quantities, inter alia, when pickling iron objects in sulphuric acid. Ferrous sulphate is used at present as a starting material in the manufacture of water-purifying chemicals containing trivalent iron, particularly ferric chloride, the ferrous sulphate, dissolved in hydrochloric acid, being oxidised in counter-flow with chlorine gas in a reaction tower. For environmental reasons and reasons of working hygiene, the equipment and apparatus used with this manufacturing process must be well sealed and the surroundings well ventilated, which renders the process expensive.

US—A—3,539,337 discloses a process for producing a highly porous ferric oxide from a manganese containing ferrous sulphate solution according to either of the formulaes.

$$24\ FeSO_4+4\ MeClO_3+22H_2O+8\ MeOH \xrightarrow{Q} 3(4Fe_2O_3 \cdot 6SO_3 \cdot Me_2O \cdot 7H_2O)+4HCl+6MeHSO_4;\ \text{or}$$

$$24FeSO_4+4MeClO_3+18H_2O+12MeOH \xrightarrow{Q} 3(4Fe_2O_3 \cdot 6SO_3 \cdot Me_2O \cdot 7H_2O)+4MeCL+6MeHSO_4$$

wherein Me is alkali metal (Na, or K),
whereby the ferric alkali metal oxysulphate is heated in oxidizing atmosphere to yield ferric oxide.

DE—B—2,630,628 discloses a process for oxidizing ferrous sulphate in an aqueous sulphuric acid using oxygen whereby prior to treating the ferrous sulphate with oxygen it is treated with hydrochloric acid. The method is particularly designed for refining aluminium containing solutions which contain ferrous sulphate.

Consequently, there is a desire for simple manufacturing methods which can be carried out in simpler kinds of apparatus. In this respect, it would be of a great advantage if oxidation of the ferrous sulphate could be effected at the local water-purification plant and that the need for large central production plants could be avoided, thereby eliminating the high costs incurred by the transportation of the chemicals required.

Also commercially available is cheap scrap iron which could be oxidised to trivalent iron, particularly in conjunction wivh chlorine, since ferric chloride is a water-soluble compound. When dissolving metallic iron in hydrochloric acid, however, only divalent iron is obtained, it being possible to obtain only some few percent $Fe^{2+}$ in solution.

It is also desirable to be able to oxidise metallic iron to trivalent iron to obtain iron chloride, and particularly iron chloride having a high Fe-content, since it is the $Fe^{3+}$-ions which produce flocculation when used as a water-purifying chemical.

Brief description of the invention

Surprisingly, it has now been found possible to oxidise ferrous ions to ferric ions in accordance with the invention, in simple apparatus and at a cost which competes well with previously known and used oxidation methods, despite the fact that these known methods use extremely cheap clorine gas. Accordingly, the present invention is characterised by oxidising divalent iron in hydrochloric acid by means of chlorate and/or hypochlorite ions, to obtain ferric ions in solution, the hydrochloric acid preferably being present in an amount beneath the stoichiometric amount.

Further characterising features of the invention are set forth in the accompanying claims.

The present invention is well suited for oxidising ferrous sulphate-heptahydrate to ferric sulphate-chloride. The reaction follows the formula

$$6FeSO_4 \cdot 7H_2O+NaClO_3+6HCl \rightarrow 6FeSO_4Cl+10H_2O+NaCl$$

Stoichiometrically, 1/6th of a mole $C10^{-}_{3}$ should be consumed for each mole of $Fe^{2+}$. Surprisingly, it is found that when practising the method according to the present invention only 60—96% of the stoichiometric amount of chlorine is required for oxidation. If only 60% chlorate ions are used, a minor quantity (<5% Fe) will remain as $Fe^{2+}$. The resultant solutions, however, contain no residues that are liable to settle, or in any event, no disturbing residues. In the odd case, it is possible that a bottom sediment of one or two tenths of one percent is obtained immediately after oxidation.

If hydrochloric acid is not present in the amount stated, one mole per mole of ferrous sulphate, oxidation will be incomplete and an insoluble ferrous sulphate precipitate is obtained, which results in a poor end product.

In accordance with the invention, it is also possible to dissolve metallic iron in concentrated hydrochloric acid, the hydrochloric acid obtaining a highest concentration of 3—4% Fe. By continually adding chlorate ions to such a hydrochloric solution, dissolved $Fe^{2+}$ is oxidised to $Fe^{3+}$, and more iron can be dissolved out and oxidised to $Fe^{3+}$.

These reactions follow the formuli

$$6Fe+12HCl \rightarrow 6FeCl_2+6H_2 6FeCl_2+NaClO_3+6HCl \rightarrow 6FeCl_3+3H_2O+NaCl.$$

Through this aspect of the invention it is also possible to obtain a ferric chloride solution containing up to 15% Fe. In accordance with this method, scrap iron is dissolved in concentrated hydrochloric acid, whereafter chlorate is added continuously in an amount corresponding to the amount of iron dissolved and oxidised, i.e. the amount of $Fe^{2+}$ obtained. A minor quantity of water should be added, in order to increase the solubility of $FeCl_2$, $FeCl_2$ is more soluble in water than in hydrochloric acid, and provided that the solution contains large quantities of hydrochloric acid, crystallisation of $FeCl_2$ can take place.

It has been found, however, that the amount of hydrochloric acid required in this reaction is less than the stoichiometric amount, while the amount of chlorate required is the stoichiometric amount, or an amount slightly thereabove. If the chlorate ions are added at a faster rate than $Fe^{2+}$ is formed, chlorine dioxide is liable to fume off, as a result of the reaction temperatures generated. The reaction $Fe^{2+} \rightarrow Fe^{3+}$ is exothermic.

The invention will now be described in more detail with reference to the following working examples, of which some have been included for comparison purposes.

Example 1

1000 grams of ferrous sulphate-heptahydrate were suspended in 340 grams of 32%-HCl and 110 grams of $H_2O$, whereafter 50 grams of $NaClO_3$ were added. During the process of oxidation, oxidised iron passes into solution, whereupon an end product is obtained in the form of a clear solution containing less than 0.1% residual $Fe^{2+}$. After being left to stand for one week, the vessel was found to have a bottom sediment of <0.1%, while the solution was quite clear.

Examples

| Ex nr | $FeSO_4 \cdot 7H_2O$ g(18%Fe) | HCl 32% g | $NaClO_3$ g | $H_2O$ g | $Cl_2$ g | NaCl g | Comments |
|---|---|---|---|---|---|---|---|
| 2 | 100 | 34 | 3.5 | 12.5 | — | — | Good; 3% $Fe^{2+}$, clear |
| 3 | 100 | 30 | 5 | 15 | — | — | Good; <0.1% $Fe^{2+}$, clear <0.2% sed. |
| 4 | 100 | 34 | 4 | 12 | — | — | Good; 1% $Fe^{2+}$, clear |
| 5 | 100 | 25 | 3.5 | 21.5 | — | — | Good; 3% $Fe^{2+}$, clear <0.1% sed. |
| 6 | 100 | — | 35 | 15 | — | — | Poor; total cryst prec. |
| 7 | 100 | 37 | — | 13 | — | — | Poor; 30% undissolved $FeSO_4$ |
| 8 | 100 | 35.6 | 1.75 | 12.6 | — | — | Poor; 20% undissolved $FeSO_4$ |
| 9 | 100 | 19 | 5 | 18.5 | — | 7.5 | Poor; high cryst. prec. |
| 10 | 100*) | 12 | 4.5 | 38 | | | Poor; 5% bottom sediment (1W) turbid |
| 11 | 100 | 28 | 8.8 | 13 | — | — | Poor; 3% bottom sediment |
| 12 | 100 | 32 | 5.3 | 13 | — | — | Unsuitable, 0.5% bottom sediment (1W) |
| 13 | 100 | 12 | 3.5 | 34.5 | — | — | Poor; 2% bottom sediment (1W) turbid |
| 14 | 100 | 45 | 5.0 | — | — | — | Poor; $ClO_2$ formation |
| 15 | 100 | 22.5 | 5.0 | 22.5 | — | — | Poor; precipitation |
| 16 | 100 | 12 | — | 38 | 5.5 | — | Poor; precipitation |

*) 11.6 Fe total

Example 17

64 grams of scrap iron were dissolved in 320 grams of 32%-HCl and 40 grams of water. After eight hours, the hydrochloric acid contained 3.5% $Fe^{2+}$. A total of 21.5 grams sodium chlorate was then added continuously for 16 hours. As an end product there was obtained 420 grams of $FeCl_3$-solution, wihch was 15% with respect to iron. The density was 1.45.

Example 18

Example 17 was repeated, but with the difference that the sodium chlorate was added discontinuously, in seven batches of 4 grams per batch over a period of 16 hours. Consequently, 28 grams of $NaClO_3$ were required. It was noted, however, that discernible quantities of chlorine dioxide were driven off with each addition. In other respects the yield was the same.

Although sodium chlorate was used in the above working examples, it will be obvious to all of normal skill in this art that any chlorate can be used, such as potassium chlorate (calcium chlorate) ammonium chlorate and barium chlorate, although sodium chlorate is to be preferred for reasons of cost. The chlorates given in parenthesis are not preferred, although they are able to provide a sulphate precipitation ($CaSO_4$, $BaSO_4$).

Hypochlorite can be used instead of chlorate, although in this case larger quantities must be used. As with chlorate, corresponding salts can also be used.

**Claims**

1. A method for manufacturing a water-purifying chemical containing trivalent iron by oxidising a compound containing divalent iron in the presence of hydrochloric acid, characterised by oxidising divalent iron in hydrochloric acid by means of chlorate and/or hypochlorite ions to obtain ferric ions in solution, the hydrochloric acid preferably being present in an amount beneath the stoichiometric amount.

2. A method according to Claim 1, characterised by oxidising ferrous sulphate heptahydrate in hydrochloric acid, the hydrochloric acid being present in an amount corresponding to 5—8% of the weight of the ingoing ferrous sulphate heptahydrate and calculated as 100% HCl, and the chlorate ions being

present in an amount corresponding to 3.5—5.5% of the weight of the ingoing ferrous sulphate-heptahydrate and calculated as sodium chlorate.

3. A method according to Claim 1, characterised by dissolving metallic iron in concentrated hydrochloric acid, whereafter resultant ferrous ions are continuously oxidised to ferric ions with chlorate ions to form a ferric chloride solution, the hydrochloric acid being present in an amount corresponding to 2.3—2.6 moles per mole of ingoing iron, and in that the chlorate ions are added in an amount corresponding at least to the stoichiometric amount.

4. A method according to Claim 2, characterised in that water is introduced into the reaction mixture in an amount such that the ingoing amount of ferrous sulphate-heptahydrate constitutes two thirds of the total reaction mixture.

5. A method according to Claim 3, characterised in that the water is introduced into the reaction mixture in order to increase the solubility of the ferric chloride formed, the water being added in an amount corresponding to 7—10% of the total reaction mixture.

**Patentansprüche**

1. Verfahren zur Herstellung einer dreiwertiges Eisen enthaltenden wasserreinigenden Chemikalie durch Oxidieren einer zweiwertiges Eisen enthaltenden Verbindung in Gegenwart von Salzsäure, dadurch gekennzeichnet, daß man zweiwertiges Eisen in Salzsäure mit Hilfe von Chlorat- und/oder Hypochloritionen oxidiert, um Eisen-III-Ionen in Lösung zu erhalten, wobei die Salzsäure vorzugsweise in einer Menge unterhalb der stöchiometrischen Menge vorliegt.

2. Verfahren nach Anspruch 1, dadurch gekennzeichnet, daß man Eisen-II-sulfatheptahydrat in Salzsäure oxidiert, wobei die Salzsäure in einer Menge entsprechend 5 bis 8% des Gewichtes des hineingehenden Eisen-II-sulfatheptahydrats und berechnet als 100% HCl vorliegt und die Chlorationen in einer Menge entsprechend 3,5 bis 5,5 Gew.-% des hineingehenden Eisen-II-sulfatheptahydrats und berechnet als Natriumchlorat vorliegen.

3. Verfahren nach Anspruch 1, dadurch gekennzeichnet, daß man metallisches Eisen in konzentrierter Salzsäure auflöst, wonach die resultierenden Eisen-II-Ionen kontinuierlich zu Eisen-III-Ionen mit Chlorationen unter Bildung einer Eisen-III-chloridlösung oxidiert werden, wobei die Salzsäure in einer Menge entsprechend 2,3 bis 2,6 Mol je Mol hineingehenden Eisens vorliegt, und daß die Chlorationen in einer Menge entsprechend wenigstens der stöchiometrischen Menge zugesetzt werden.

4. Verfahren nach Anspruch 2, dadurch gekennzeichnet, daß Wasser in das Reaktionsgemisch in einer solchen Menge eingeführt wird, daß die hineingehende Menge an Eisen-II-sulfatheptahydrat zwei Drittel des gesamten Reaktionsgemisches ausmacht.

5. Verfahren nach Anspruch 3, dadurch gekennzeichnet, daß das Wasser in das Reaktionsgemisch eingeführt wird, um die Löslichkeit des gebildeten Eisen-III-chloride zu erhöhen, wobei das Wasser in einer Menge entsprechend 7 bis 10% des gesamten Reaktionsgemisches zugegeben wird.

**Revendications**

1. Procédé de fabrication d'un produit chimique de purification de l'eau, contenant du fer trivalent, par oxydation d'un composé contenant du fer divalent en présence d'acide chlorhydrique, caractérisé par l'oxydation de fer divalent dans de l'acide chlorhydrique grâce à des ions chlorate et/ou hypochlorite pour obtenir des ions ferriques en solution, l'acide chlorhydrique étant de préférence présent en une quantité inférieure à la quantité stoechiométrique.

2. Procédé suivant la revendication 1, caractérisé par l'oxydation de sulfate ferreux heptahydraté dans de l'acide chlorhydrique, celui-ci étant présent en une quantité correspondant à 5—8% du poids du sulfate ferreux heptahydraté entrant et calculée pour du HCl à 100%, les ions chlorate étant présents en une quantité correspondant à 3,5—5,5% du poids du sulfate ferreux heptahydraté entrant et calculée pour le chlorate de sodium.

3. Procédé suivant la revendication 1, caractérisé par la dissolution de fer métallique dans de l'acide chlorhydrique concentré, les ions ferreux résultants étant ensuite continuellement oxydés en ions ferriques avex des ions chlorate pour former une solution de chlorure ferrique, l'acide chlorhydrique étant présent en une quantité correspondant à 2,3—2,6 moles par mole de fer entrant, les ions chlorate étant ajoutés en une quantité correspondant au moins à la quantité stoechiométrique.

4. Procédé suivant la revendication 2, caractérisé en ce qu'on introduit de l'eau dans le mélange de réaction en une quantité telle que la quantité entrante de sulfate ferreux heptahydraté constitue dans deux tiers du mélange total de réaction.

5. Procédé suivant la revendication 3, caractérisé en ce que qu'on introduit de l'eau dans le mélange de réaction afin d'augmenter la solubilité du chlorure ferrique formé, l'eau étant ajoutée en une quantité correspondant à 7—10% du mélange total de réaction.